# EUROPEAN PATENT APPLICATION

(11) **EP 4 621 805 A1**
(43) Date of publication of application: **24.09.2025**
(21) Application number: 24174142.0
(22) Date of filing: 03.05.2024
(51) Int. Cl.: G21C 17/10, G21C 17/104, G21C 17/108, G21C 17/116

(54) **METHOD OF SEALING NEUTRON FLUX MEASUREMENT CHANNELS IN NUCLEAR REACTOR HEAD NOZZLE, DEVICE FOR INSTALLATION OF NEUTRON FLUX MEASUREMENT CHANNELS TO PERFORM THIS METHOD, AND NEUTRON FLUX MEASUREMENT CHANNEL FOR THIS DEVICE**

(30) Priority: 22.03.2024 CZ 20240106
(71) Applicant: Skoda JS a.s., 316 00 Plzen (CZ)
(72) Inventor: Cechura, Zbynek, 31600 Plzen (CZ); Kratochvil, Libor, 31600 Plzen (CZ); Homolka, Petr, 31600 Plzen (CZ)
(74) Representative: Pavlica, Tomas

(57) **Abstract**

Method of sealing a set of neutron flux measurement channels arranged in one nozzle on the nuclear reactor head in that nozzle, according to which all the neutron flux measurement channels in the set are put into a common removable channel-fastening device designed for insertion into this nozzle, the individual neutron flux measurement channels are sealed in this channel-fastening device, a fixing flange is set on the nozzle to be in contact with it on seating surfaces only, the nozzle is firmly attached to the fixing flange, with the seating surfaces thus being sealed against the pressure of the reactor primary circuit water, the channel-fastening device is connected with a forcing-off flange, the forcing-off flange is connected with the fixing flange, and then by pressing the forcing-off flange away from the fixing flange the channel-fastening device is sealed in the fixing flange. According to this invention, a device for neutron flux measurement is also presented to perform the method of sealing the set of neutron flux measurement channels, where these neutron flux measurement channels are arranged in one nozzle of the nuclear reactor head, and also the corresponding neutron flux measurement channel.

## Description

### Field of the invention

The invention concerns the device for installation of neutron flux measurement channels for WER-type nuclear reactors that can be used in nuclear power plants. This device is intended to lead out signals of neutron flux density distribution in the reactor active core to an evaluation system.

### Background of the invention

The nuclear reactor output must be controlled to achieve the safe and economical operation of a nuclear power plant. To this end, one has to monitor, among other things, the neutron flux course by means of a neutron flux measuring instrument. In the WER-type nuclear reactors, neutron flux is measured in the reactor by means of neutron flux measurement channels. The neutron flux measurement channel is a measuring instrument containing self-powered detectors designed to check neutron flux density distribution along the height and radius of the active core by continually transforming the incident neutron radiation into electric current. The signal of each neutron flux measurement channel is led out to the respective measuring apparatus, which processes it and thus transmits the basic information on the real-time status of the reactor active core.

Neutron flux measurement channels are fitted in a nuclear reactor by means of a set of nozzles arranged on the nuclear reactor head where each nozzle is provided with a neutron flux measurement channels installation device for an installation of the neutron flux measurement channels, and each of the devices comprises a set of neutron flux measurement channels. For instance, in WER 1000 nuclear power plants, every installation device for neutron flux measurement channels contains four neutron flux measurement channels, which are thus arranged together in a single nozzle.

Neutron flux measurement channels are very long; one neutron flux measurement channel has up to 12 m in length and not more than 2.5 cm in diameter. A shorter part of the neutron flux measurement channel is located above the reactor while a longer part of it is arranged inside the reactor. Several self-powered detectors are most often deployed in the part of the neutron flux measurement channel located inside the reactor; for example, the neutron flux measurement channel for the WER 1000 reactor has seven rhodium detectors used to check neutron flux density distribution along the height and radius of the nuclear reactor active core by way of continual transformation of the incident neutron radiation into electric current. The part of the neutron flux measurement channel located above the reactor head contains a hermetic penetration and a connector. As parts of the device for installation of neutron flux measurement channels get into contact with the coolant of the reactor primary circuit, both the neutron flux measurement channel and the whole device for installation of neutron flux measurement channels have the function of sealing barriers against the action of the primary circuit coolant, and their leak-tightness must be ensured during every nuclear reactor shutdown for every single neutron flux measurement channel. Compliance with the requirement for leak-tightness of the device for installation of neutron flux measurement channels is crucial for reliable operation of the nuclear power plant.

The disadvantages of the current devices for installation of neutron flux measurement channels are mainly higher workload during shutdown refuelling as every single neutron flux measurement channel must be dismantled in the device for installation of neutron flux measurement channels, whereby extending the shutdown period, and higher radiation doses of the staff during the shutdown. Moreover, every neutron flux measurement channel must be pulled out of the reactor and slid back several times during the nuclear reactor shutdown. The sliding lines for the individual channels are not straight, causing the neutron flux measurement channel to bend when being pulled out and slid back into the reactor and, as a consequence, to rub against the guide pipe walls resulting in the neutron flux measurement channel being stressed mechanically. This leads to reduction of the service life of the neutron flux measurement channel and higher consumption of the sealing rings needed to seal every neutron flux measurement channel. On the other hand, however, there is the requirement to ensure leak-tightness of the device for installation of neutron flux measurement channels towards the nozzle on the nuclear reactor head.

### Subject of the invention

The above-mentioned disadvantages are eliminated by the present invention, which according to the first aspect of the invention describes a method of sealing a set of neutron flux measurement channels in one nozzle on the nuclear reactor head, said set being arranged in that nozzle, and according to the second aspect of this invention a device for installation of neutron flux measurement channels to execute this method of sealing the set of neutron flux measurement channels. According to the third aspect, a neutron flux measurement channel is disclosed, which is intended to be installed in the device according to the second aspect.

The present method of sealing the set of neutron flux measurement channels arranged in one nozzle on the nuclear reactor head in that nozzle is based on an inventive idea that all the neutron flux measurement channels in the set are put into a common removable channel-fastening device designed for a repeated insertion into this nozzle, the individual neutron flux measurement channels are sealed in this channel-fastening device, a fixing flange is set on the nozzle to be in contact with it on seating surfaces only, the nozzle is firmly attached to the fixing flange with the seating surfaces thus being sealed against the pressure of the reactor primary circuit water, the channel-fastening device is connected with a forcing-off flange, the forcing-off flange is connected with the fixing flange, and then by pressing the forcing-off flange away from the fixing flange the channel-fastening device is sealed in the fixing flange.

According to an advantageous embodiment of this invention, the neutron flux measurement channels are turned before being sealed in the channel-fastening device into a position needed to allow remote connection of connectors to them.

The subject of the invention of the neutron flux measurement channels installation device to implement the method of sealing the set of neutron flux measurement channels according to the first aspect where these neutron flux measurement channels are arranged in one nozzle on the nuclear reactor head is that it comprises:-
- a channel-fastening device with a cylindrical body for attaching a set of neutron flux measurement channels, which is provided in its upper part with channel bearings for inserting the individual neutron flux measurement channels of the mentioned set and which is designed in its lower part for insertion into the lid nozzle, while each channel bearing is provided with an inner thread for connection with the neutron flux measurement channel;
- a fixing flange with an internal through hole for putting on the channel-fastening device, which is designed with a step mounting for sealed connection with the cylindrical body of the channel-fastening device, where the cylindrical body is provided with a step for placing a sealing ring, said step is appropriately machined on the body, and the fixing flange is further provided with at least two sealing surfaces for sealed connection with the nozzle and at least three holes for fasteners to connect with the nozzle, distributed in an angular manner around the circumference; and
- a forcing-off flange with a locking mechanism for connection with the channel-fastening device, while the channel-fastening device is provided with a complementary locking element co-operating with the locking mechanism, and the fixing flange is further provided with at least three holes distributed around the circumference for the flange fasteners, while the forcing-off flange is provided with at least three corresponding through holes for these flange fasteners, and the forcing-off flange is further provided with at least three forcing-off elements for sealing the connection of the channel-fastening device with the fixing flange by means of the above-mentioned steps.

According to one especially advantageous example of embodiment, the device for installation of neutron flux measurement channels is fitted with a fixing flange which is provided with six holes around the circumference for the flange fasteners, which are bolts, with the holes being plain to allow the passing of the bolts to be threaded into the nozzle, and the fixing flange is further provided with three threaded holes around the circumference with step mountings for forcing-off screws.

According to another especially advantageous example of embodiment, the device for installation of neutron flux measurement channels is fitted with bolts, which are bolts with rods used to measure bolt elongation.

According to yet another especially advantageous example of embodiment, the device for installation of neutron flux measurement channels is fitted with forcing-off screws with collars to facilitate the dismantling of the forcing-off flange.

According to the third aspect, a neutron flux measurement channel is disclosed for the device for installation of neutron flux measurement channels according to the second aspect, where this neutron flux measurement channel comprises an upper part (I) terminated with a connector and a lower part (II) with sensors, with the subject of the invention being that the upper part (I) is provided with a cylindrical section terminated with a collar to which a cylindrical sealing part is connected from the opposite side to form a sealing assembly together with the collar to seal the neutron flux measurement channel in the device for installation of neutron flux measurement channels, while the collar and the cylindrical sealing part form a space for sealing rings, with a socket screw with an outer thread being arranged in a sliding manner on the cylindrical section for connection with the inner thread in the bearing in the channel-fastening device and with a fixation device being mounted on the opposite end of the cylindrical section to prevent the neutron flux measurement channel from turning.

According to one especially advantageous example of embodiment, the neutron flux measurement channel is provided with a sealing part designed for three sealing rings arranged above each other.

The advantages of the present invention will be obvious from the data shown in Tab. 1 where there are times needed for the individual handling tasks with the current device and with the device for installation of neutron flux measurement channels according to the invention.

Functionality was verified on the testing stand of the applicant where trial assembly and disassembly of the device for installation of neutron flux measurement channels according to the invention were performed.

A hot test was also performed on the testing facility, during which the prescribed design, operating and emergency modes of the WER 1000 reactor were simulated.

The individual handling tasks of the device for installation of neutron flux measurement channels according to the invention are described in Tab. 1 along with the comparison of workloads when using the state of art and the present device for installation of neutron flux measurement channels.

This table provides the following advantages for device for installation of neutron flux measurement channels according to the invention:
- Lower workload during refuelling shutdowns with the consequent shorter shutdown and lower refuelling costs;
- Lower radiation doses of the staff during shutdown as a result of reducing the time of staff presence in the radiation environment;
- Longer service life of the neutron flux measurement channel due to the lower number of sequences of pulling it out and sliding it in during shutdown;
- Lower consumption of sealing rings.

Tab. 1 Comparison table of neutron flux measurement channel (KNI) handling during reactor refuelling

| Simplified comparison table of KNI handling during refuelling | | | |
|---|---|---|---|
| Device for installation of neutron flux measurement channels - state of art solution | Staff (persons) Duration (hrs) | Device for installation of neutron flux measurement channels - solution according to the invention | Staff (persons) Duration (hrs) |
| Unsealing the flanges and pulling the KNI bundles out above the distance plate of the upper block (HB) | 3 | Disconnecting the cable connectors Unsealing the device flanges and pulling them out to the distance plate of the HB | 3 |
| | 5 | | 8 |
| | Σ 15 | | Σ 24 |
| Disconnecting the KNI bundles from the flanges and inserting them to the level of HB nozzles | 3 | Not performed | |
| | 6 | | |
| | Σ 18 | | |

| HB removal - Setting the transport platform of the protective tubes block (BOT) | | | |
|---|---|---|---|
| Pulling out the KNI bundles to the level of the BOT upper platform | | Pulling out the channel-fastening device with KNI to the level of the BOT upper platform | |

| Transporting BOT from and into the reactor | | | |
|---|---|---|---|
| Sliding the KNI bundles to the level of the HB nozzle flanges | | Sliding in the channel-fastening device with KNI to the level of the HB nozzle flanges | |

| Setting the HB | | | |
|---|---|---|---|
| Pulling out the KNI bundles to the level of the distance plate of the HB, removing covers, mounting the KNI bundles into flanges, connection of KNI bundles and sliding them in to the level of the HB nozzles | 3 | Not performed | |
| | 6 | | |
| | Σ 18 | | |
| Sealing the device flanges in the HB nozzle | 3 | Sealing the device flanges in the HB nozzle, connecting cable connectors | 3 |
| | 7 | | 12 |
| | Σ 21 | | Σ 36 |
| Total number of hours | 72 | | 60 |

As follows from Tab. 1, only two movements of the neutron flux measurement channel instead of the original six movements of the bundle (sliding in, pulling out) are needed in the new solution, which means a considerable reduction of the mechanical stress of the neutron flux measurement channel. The total expected saving of 12 hours also brings a significant reduction of the radiation doses received by the staff, not counting the repair cost reduction.

Before refuelling the reactor and after disconnecting the connectors and unsealing both flanges, one can pull out from one nozzle the whole channel-fastening device including all neutron flux measurement channels sealed in it.

### Description of drawings

Fig. 1 shows a cross-section of the state of art example of the device for installation of neutron flux measurement channels and the sealing of neutron flux measurement channels KNI in the device.
Fig. 2a shows broken-out sectional view B-B (see Fig. 2b) through the device for installation of neutron flux measurement channels according to the invention when viewed from the side, including execution of the sealing of the neutron flux measurement channels in the channel-fastening device and of the channel-fastening device in the device for installation of neutron flux measurement channels.
Fig. 2b shows a cross section through the device for installation of neutron flux measurement channels according to the invention in the A-A plane (see Fig. 2a) when viewed from above (the sectional view shows the distribution of bolts 8 with rods and forcing-off screws 10 and 11).
Fig. 2c shows a cross section through the device for installation of neutron flux measurement channels according to the invention in the D-D plane (see Fig. 2a) when viewed from above (between the fixing flange and the forcing-off flange).
Fig. 3 shows neutron flux measurement channel KNI, depicting the two fundamental parts - immersed (I) and not immersed (II).
Fig. 4 shows the position of the device for installation of neutron flux measurement channels on the reactor head.

### Invention embodiment examples

To facilitate the understanding of the method of sealing neutron flux measurement channels and of the device used to perform this method according to this invention, examples are described below of its possible embodiment. These examples are for the purpose of understanding and illustrating the invention only and they should not be construed as any limitation of the invention to these described examples. For better understanding of the invention, the device for installation of neutron flux measurement channels will be described first and only then the method of sealing the neutron flux measurement channels according to the invention.

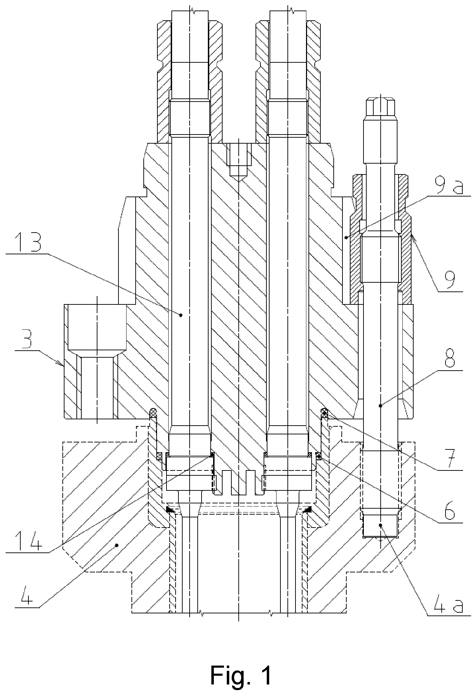

Fig. 1 shows the embodiment of the device for installation of neutron flux measurement channels according to the state of the art.

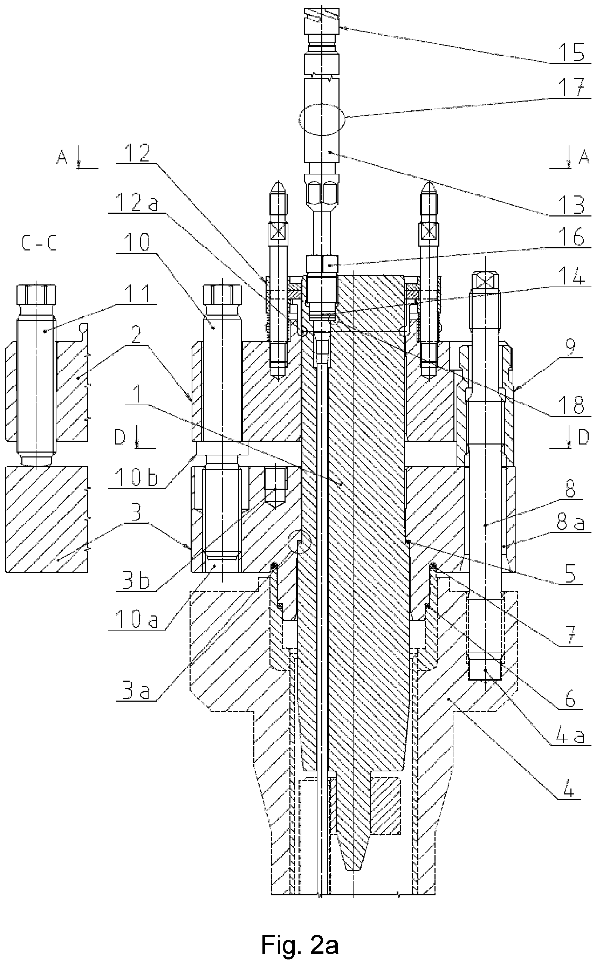

Fig. 2a through 2c show one of the possible examples of embodiment of the device for installation of neutron flux measurement channels according to this invention. The device for installation of neutron flux measurement channels comprises substantially a channel-fastening device 1, a fixing flange 3 provided in a sliding way on the channel-fastening device 1, a forcing-off flange 2 with a locking mechanism 12, forcing-off screws 10,11 and sealing rings 5,6,7. The locking mechanism 12 of forcing-off flange 2 is to provide a reliable attachment of the channel-fastening device 1 in the forcing-off flange 2.

The channel-fastening device 1 is designed to fasten all neutron flux measurement channels 13 arranged in one nozzle 4 of the nuclear reactor head, being provided with bearings in which individual neutron flux measurement channels 13 are seated. Each bearing is followed by a duct through which the neutron flux measurement channel 13 comes out of the channel-fastening device 1 so as to be able to pass into the nuclear reactor. According to the depicted advantageous example of embodiment, the channel-fastening device 1 is designed as a tube plate and provided with four channel bearings to accommodate four neutron flux measurement channels 13. The individual channel bearings are interconnected with the ducts which follow them, through which neutron flux measurement channels 13 pass to exit the channel-fastening device. The individual channel bearings are designed for a sealed attachment of each neutron flux measurement channel 13 in the channel-fastening device 1. Thus, channel-fastening device 1 allows joint handling of all the neutron flux measurement channels 13 fastened in it.

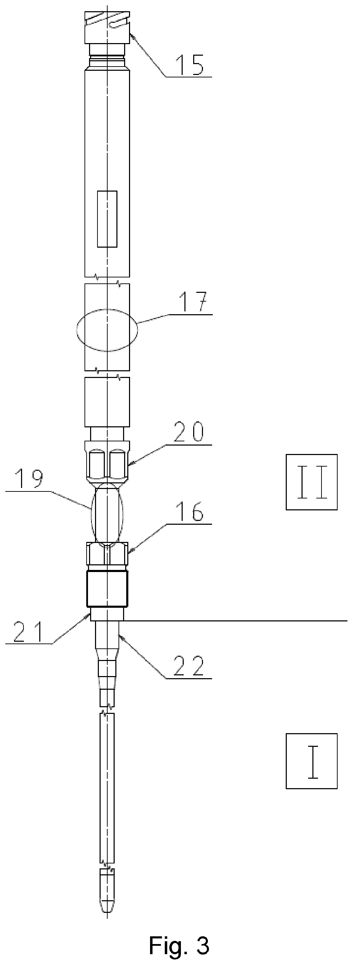

On Fig. 2a, three sealing rings 14 of the individual neutron flux measurement channels 13 arranged above each other are inserted into each of the four channel bearings in channel-fastening device 1 for sealed connection of individual neutron flux measurement channels 13 with channel-fastening device 1. In this example of the embodiment, four neutron flux measurement channels 13 are inserted into the channel-fastening device 1 with the sealing rings 14. The individual neutron flux measurement channels 13 are sealed in the channel-fastening device 1 by means of the integral socket screws 16. Each neutron flux measurement channel is fitted with one integral socket screw 16 mounted in a movable way on cylindrical section 19 (see Fig. 3). Integral socket screws 16 are provided with outer threads. When screwing the integral socket screw 16 of the neutron flux measurement channel 13 into the channel bearing provided with an appropriate inner thread working with the outer thread of the integral socket screw 16, the sealing rings 14 arranged in the channel bearing will compress to seal the neutron flux measurement channel 13 in the channel-fastening device 1. Each neutron flux measurement channel 13 is especially advantageously marked for a correct orientation in the channel-fastening device 1, such as with lines. Such marking is provided both on the channel-fastening device 1 and on the neutron flux measurement channel 13 for the correct orientation of the connector 15 towards the axes of the neutron flux measurement channels installation device. Such orientation is especially advantageous to ensure correct orientation of the connecting connectors of all the neutron flux measurement channels in one channel-fastening device 1 when connecting and disconnecting connectors 15 of the individual neutron flux measurement channels remotely.

The channel-fastening device 1 passes through the fixing flange 3 and the forcing-off flange 2 with the locking mechanism 12. The fixing flange 3 is connected with the nozzle 4 of the reactor head by means of flange fasteners. In the embodiment example shown in Fig. 2a, the flange fasteners comprise bolts 8 with rods and nuts 9. In the depicted example of the embodiment, the fixing flange 3 is provided around the circumference with six plain holes 8a to pass bolts 8 with rods. In this example of the embodiment, the bolts 8 with rods are screwed into threaded holes 4a appropriately made in the nozzle 4. The fixing flange 3 is then attached to the nozzle 4 by means of nuts 9 threaded onto bolts 8 with rods and bearings on the fixing flange 3 so that, after tightening, the fixing flange 3 is attached to the nozzle 4. The sealing rings, which, in this example of the embodiment, consist of a primary sealing ring 6 and a secondary sealing ring 7, are mounted on the contact places of the nozzle 4 and the fixing flange 3 to achieve a sealed connection of the fixing flange 3 with the reactor head nozzle 4, and this system together with other elements provides the possibility to indicate leakage in the flange joint.

In the depicted example of the embodiment, the fixing flange 3 has three stepped threaded holes 10a with threads for forcing-off screws 10 with collars 10b distributed around the circumference. In this example of the embodiment, threaded holes 10a, forcing-off screws 10 and collars 10b together create forcing-off elements to force the forcing-off flange 2 from the fixing flange 3. The step mounting 3a in the hole with the contact surface for the sealing ring 5 is constructed in the axis of fixing flange 3, and the channel-fastening device 1 is provided with a complementary step mounting onto which the sealing ring 5 is located. When forcing the forcing-off flange 2 connected by means of the locking mechanism 12 with the channel-fastening device 1 away from the fixing flange 3 by means of the forcing-off elements, the channel-fastening device 1 gets pressed to the fixing flange 3 and, thus, the sealing ring 5 between them ensures mutual sealing. Furthermore, in this example of the embodiment, two threaded holes 3b are constructed especially advantageously on the upper face of the fixing flange 3 for handling fixing flange 3 during assembly and disassembly by means of devices.

In the device according to the invention, the forcing-off flange 2 provided with the locking mechanism 12 is located above the fixing flange 3 (the direction is taken when installing the device on the reactor head, where the terms "above, on the top, upwards, etc." are considered to mean away from the reactor, while the terms "below, down, downwards, etc." are considered to mean into the reactor). The locking mechanism 12 is designed for a secured connection of the channel-fastening device 1 in the forcing-off flange 2. The locking mechanism 12 together with the forcing-off elements ensures the channel-fastening device 1 sealing in the fixing flange 3 by pressing the forcing-off flange 2 from the fixing flange 3, as described further below. In the depicted example of the embodiment of the device according to the invention, the locking mechanism 12 comprises four pull-out segments 12a, the segments are made of a stainless steel, and arranged in a circle to ensure axial connection of forcing-off flange 2 with channel-fastening device 1. These pull-out segments 12a are designed to slide into the locking element constructed on the channel-fastening device 1, which is a shaped groove in this example. The locked connection is done by connecting the locking mechanism 12 with the locking element on the channel-fastening device 1, whereby the channel-fastening device 1 is connected firmly with the forcing-off flange 2. In the depicted example of the embodiment, the locking mechanism 12 is designed so that after the activation, for instance by turning slightly, segments 12a get out of the forcing-off flange 2 and engage into the appropriately designed locking element on the channel-fastening device 1. Vice versa, in this example of the embodiment, upon deactivation, the segments 12a slide back into the forcing-off flange 2. By disconnecting the locking mechanism 12 from the locking element of the channel-fastening device 1, the channel-fastening device will disconnect from the forcing-off flange 2. In this example of the embodiment, the locking element is a groove constructed on channel-fastening device 1 at required height around its circumference. Of course, other design of locking mechanism 12 and of the corresponding appropriate locking element on channel-fastening device 1 is possible, the only important requirement being to secure firm connection of the channel-fastening device 1 with the forcing-off flange 2 in order to seal the channel-fastening device 1 in the fixing flange 3 in the device according to the invention.

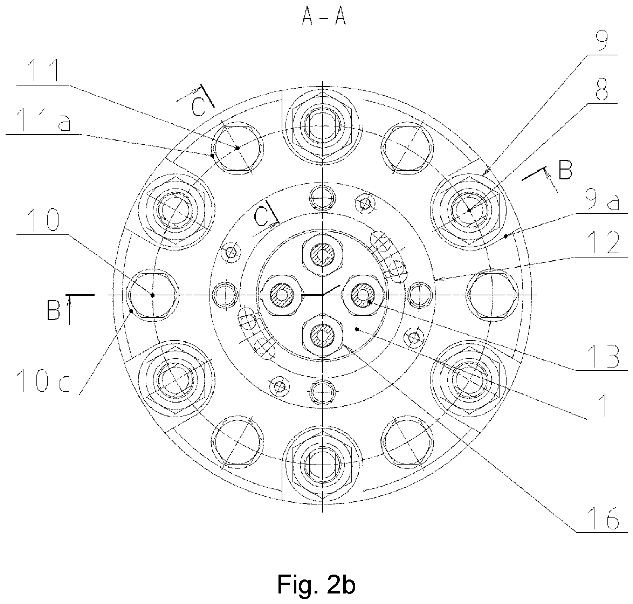

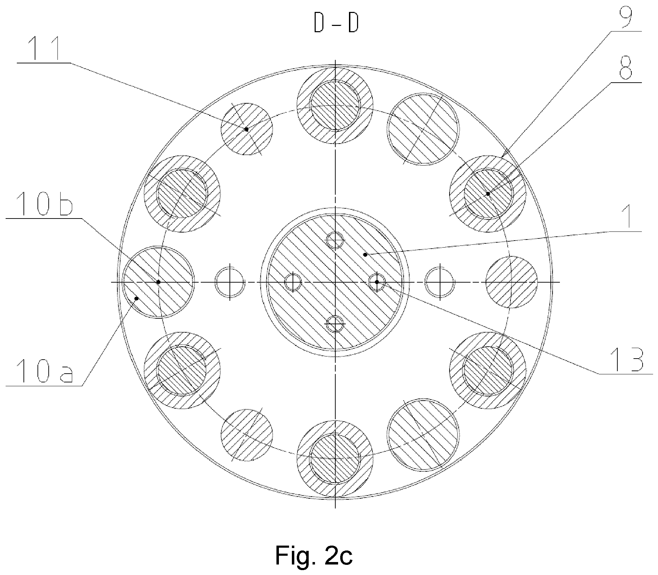

As shown in Fig. 2a through 2c, in this example of the embodiment, the forcing-off flange 2 has six radial recesses 9a on the outer circumference (see Fig. 2b) to provide access to the six bolts with the rods 8 and to the six nuts 9 screwed on them. Further, the forcing-off flange 2 has three plain holes 10c (see Fig. 2b) with no threads to pass the forcing-off screws 10 through the forcing-off flange 2 so that they can be turned above the forcing-off flange 2. As already mentioned above, the forcing-off screws 10 having the collars 10b work as the forcing-off elements in this example of the embodiment. In this example of the embodiment, the forcing-off elements are also provided by forcing-off screws 11 and the three threaded holes 11a (see Fig. 2b) in the forcing-off flange 2, into which the forcing-off screws 11 are screwed as shown in sectional view C-C on a sector of the forcing-off flange 2 and the fixing flange 3, also depicted in Fig. 2a next to these flanges. The threaded holes 11a are especially advantageously designed with left-hand threads to make it possible to distinguish the forcing-off screws 11 from the forcing-off screws 10 with the collars 10b. The forcing-off screws 11 bear on the fixing flange 3 and, by screwing them out of the threaded holes 11a, the forcing-off flange 2 is also pressed away from the fixing flange 3. The forcing-off screws 10 and 11, therefore, work jointly as part of the forcing-off elements to press forcing-off flange 2 away from the fixing flange 3. When screwing the forcing-off screws 10 out of the fixing flange 3, the collar 10b bears on the lower side of the forcing-off flange 2 to ensure its pressing away from the fixing flange 3. When being screwed into the fixing flange 3, the forcing-off screws 10 will ensure by seating on the nozzle, separation of the fixing flange 3 from the nozzle 4 of the reactor head when disassembling the device according to the invention. In this example of the embodiment, both forcing-off flange 2 and fixing flange 3 are made of corrosion-resistant austenitic steel. In this example of the embodiment, the forcing-off screws 10 and 11 are made of alloyed heat-resisting steel. Fig. 2b shows sectional view A-A through the device according to the invention with the especially advantageous arrangement of bolts 8 with rods as flange fasteners and forcing-off screws 10 and 11 as forcing-off elements in the forcing-off flange 2. As follows from Fig. 2b, the bolts 8 with rods and nuts 9 screwed on them are located in recesses 9a in the forcing-off flange so that they can be turned without interference with the forcing-off flange 2. Further, it shows the location of the channel-fastening device 1 in the forcing-off flange 2 and attachment of the individual neutron flux measurement channels 13 by means of integral socket screws 16 in the channel-fastening device 1. It also shows sectional view C-C depicting the attachment of forcing-off screw 11 in forcing-off flange 2. Fig. 2c then shows sectional view D-D through the device according to the invention from Fig. 2a through the point identified D-D above fixing flange 3. Fig. 2c shows the distribution of the flange fasteners which, in this example of the embodiment, include nuts 9 and bolts 8 with rods. Further, it shows the attachment of the forcing-off screws 10 and 11 as parts of the forcing-off elements as well as a section through the channel-fastening device 1 and sensors of the neutron flux measurement channels arranged in the ducts of the channel-fastening device 1.

Fig. 3 presents one of the possible examples of embodiment of the neutron flux measurement channels 13. In this example of the embodiment, the lower part (I) of the neutron flux measurement channel 13 contains seven rhodium self-powered detectors, which are used to check the distribution of a neutron flux density over the height and radius of the WER 1000 nuclear reactor active core. The upper part (II) of the neutron flux measurement channel 13 located above the reactor head comprises a hermetic penetration 17, which provides for a hermetic separation of the neutron flux measurement channel outlet from the lower part (I) of the neutron flux measurement channel, and connector 15 for connection of the neutron flux measurement channel to a remote measuring instrument. The hermetic penetration 17 serves as a second sealing barrier against the action of the primary circuit coolant. The connector 15 allows a remote connection and disconnection of the neutron flux measurement channel 13 with/from the interconnection cable as also shown in Fig. 2a. The neutron flux measurement channel 13 is provided with a cylindrical sealing part 22, which is designed as a step to be slid into graphite sealing rings 14 arranged in the channel-fastening device 1, for sealing in this channel-fastening device 1. The cylindrical sealing part 22 together with the collar 21 and the step mountings 18 of the channel-fastening device 1 forms a sealing assembly with which the neutron flux measurement channel 13 is sealed in the channel-fastening device 1 of the neutron flux measurement device. The collar 21, the cylindrical sealing part 22 and the step 18 form a space for graphite sealing rings 14. In the example of the embodiment depicted in Fig. 2a, sealing of each neutron flux measurement channel in the channel-fastening device 1 is especially advantageously performed by means of graphite sealing rings 14 arranged in the sealing assembly on each other by being slid onto the cylindrical sealing part of the neutron flux measurement channel 13 and pressed by means of integral socket screw 16. The integral socket screw 16 is screwed into the thread of the appropriate bearing of the channel-fastening device 1 to press against collar 21. Thus, when screwing the integral socket screw 16 into the channel-fastening device, the collar 21 is pressed against the step mounting 18. By screwing the integral socket screw 16, sealing rings 14 are compressed in the given sealing assembly, whereby sealing the neutron flux measurement channel 13 in the channel-fastening device 1. In this example of the embodiment, each sealing assembly has three graphite sealing rings, but their number may differ, being either lower or higher. The sealing of the individual neutron flux measurement channels 13 in channel-fastening device 1 is not disassembled during the whole service life of the neutron flux measurement channel. During the refuelling shutdown, channel-fastening device 1 is pulled out including all the neutron flux measurement channels 13 located and sealed in it.

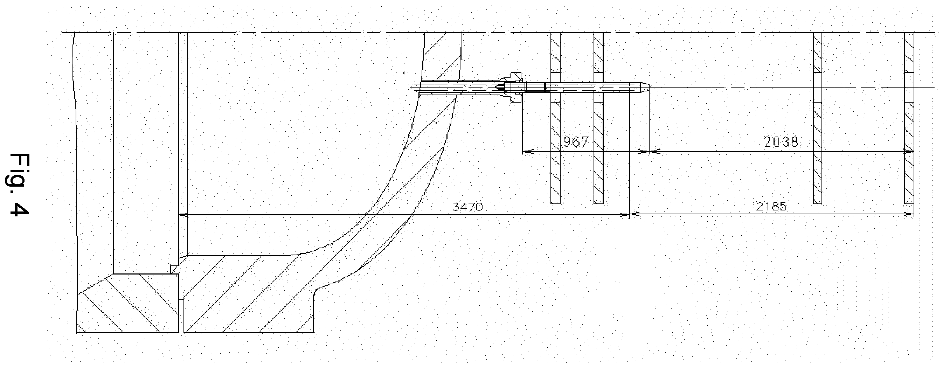

Fig. 4 presents a location of one device for installation of the neutron flux measurement channels on the reactor head and the distances to get an idea of the dimensions and distances. The data on the figure are provided in mm.

The example of the method of installation and sealing of neutron flux measurement channels 13 by means of the exemplary device for installation of neutron flux measurement channels is performed in the following steps:
1. Three sealing rings 14 are put into each of the four holes for sealing the respective neutron flux measurement channel 13 in channel-fastening device 1, after which neutron flux measurement channels 13 are slid into channel-fastening device 1 with sealing rings 14 and each neutron flux measurement channel 13 is sealed in channel-fastening device 1 by means of integral socket screw 16.
2. Bolts 8 with rods are screwed and primary sealing ring 6 is put into reactor lid nozzle 4.
3. Sealing ring 5 is placed on channel-fastening device 1 and individual neutron flux measurement channels 13 arranged in channel-fastening device 1 are slid into the guide tubes of the protective tubes block.
4. 3 forcing-off screws with collar 10 and secondary sealing ring 7 are mounted in fixing flange 3 and fixing flange 3 is lowered to the sealing place by means of two assembly tie-rods screwed into appropriate threaded holes for handling 3b in fixing flange 3 for handling the same.
5. Nuts 9 are screwed onto bolts 8 with rods.
6. Three forcing-off screws 11 are threaded into the respective holes in forcing-off flange 2 so that the lower faces of these forcing-off screws 11 are sunk under the level of the face of forcing-off flange 2, after which forcing-off flange 2 is lowered to fixing flange 3 by means of the assembly tie-rods, with which it is connected.
7. A tensioner is used to tighten (stretch) individual bolts 8 with rods to the required elongation, which is measured by means of the bolt rod, after which nuts 9 are tightened so as to secure this required elongation of bolts 8 with rods, in order to ensure proper sealing of the flange joint of fixing flange 3 and nozzle 4 of the reactor head by compressing primary and secondary sealing rings 6 and 7 between them.
8. Locking mechanism 12, which, in the given example of the embodiment, is formed by sealing ring and four segments 12a, is turned slightly clockwise in forcing-off flange 2 to disengage the segments 12a of the locking mechanism 12 of the forcing-off flange 2 and engage them in the groove of the channel-fastening device 1 for a firm connection of the forcing-off flange 2 with the channel-fastening device 1.
9. A face spanner wrench is used to turn out the forcing-off screws 10 and 11, whereby raising the forcing-off flange 2 approximately to the upper level, and then the forcing-off flange 2 is separated from the fixing flange 3 by turning the forcing-off screws 10 and 11 by means of torque tensioner, whereby the channel-fastening device 1 attached in the forcing-off flange 2 is pulled into the fixing flange 3 until the sealing ring 5 bears on the step mounting in fixing flange 3 and channel-fastening device 1 is sealed in the fixing flange 3.

An expert will understand that in the above-mentioned example of the embodiment of the method according to the invention, all steps need not be performed in the described order but it is important to observe the order of the steps described in the subject of the invention defined by the relevant patent claims. Also, the device according to the invention and the neutron flux measurement channel according to the third aspect of this invention does not need to disclose all the mentioned features corresponding precisely to the described embodiments, which were mentioned for illustration only, but are only limited by the wording of the patent claims. An expert will also understand that, for instance, the bolts with rods and the corresponding threaded holes and other described elements securing the connection of the fixing flange with the nozzle only represent an especially advantageous example of embodiment of the flange fasteners. Also, the connection of both flanges to each other and subsequent provision of pressing the forcing-off flange away from the fixing flange can be performed using different forcing-off means than those described in the example of the embodiment. By virtue of the described examples of connection, an expert will find other examples of connection and sealing of both flanges, which may differ from the described connection and sealing method, especially in using another type or number of fasteners, tools used for assembly, etc. Similarly, the design and number of seals, etc. or other individual elements of the described device may differ without the resulting solution departing from the subject of the invention. Thus, the invention is not limited to the disclosed examples but by the scope of the patent claims only.

### Industrial applicability

The practical use of the present invention is expected especially for in-core neutron flux measurement in WER-type reactors.

### Reference numerals

- 1: Channel-fastening device (tube plate)
- 2: Forcing-off flange
- 3: Fixing flange
- 3a: Step mounting for sealing ring
- 3b: Threaded hole for handling
- 4: Reactor head nozzle (hatched part)
- 4a: Threaded hole in nozzle 4 (for bolt 8)
- 5: Sealing ring
- 6: Primary sealing ring
- 7: Secondary sealing ring
- 8: Bolt with rod
- 8a: Plain hole in fixing flange (for bolt 8)
- 9: Nut
- 9a: Radial recess in forcing-off flange (for nut 9 of bolt 8)
- 10: Forcing-off screw
- 10a: Stepped threaded hole (for forcing-off screw 10)
- 10b: Forcing-off screw collar
- 10c: Plain hole (for forcing-off screws 10)
- 11: Forcing-off screw
- 11a: Hole with left-hand thread (for forcing-off screws 11)
- 12: Locking mechanism
- 12a: Locking mechanism segment
- 13: Neutron flux measurement channel
- 14: Sealing ring
- 15: Connector
- 16: Socket screw
- 17: Hermetic penetration
- 18: Step in channel-fastening device
- 19: Cylindrical section
- 20: Fixation device
- 21: Collar
- 22: Cylindrical sealing part

## Claims

1. Method of sealing a set of neutron flux measurement channels arranged in one nozzle on the nuclear reactor head in that nozzle, **characterized by**
- inserting all neutron flux measurement channels of the set into a common removable channel-fastening device, said common removable channel-fastening device adapted for insertion into said nozzle,
- sealing each neutron flux measurement channel in said channel-fastening device,
- a fixing flange being set on the nozzle, the fixing flange contacting the nozzle on seating surfaces only,
- attaching the fixing flange to the nozzle, the seating surfaces being sealed against the pressure of the reactor primary circuit water, and
- connecting the channel-fastening device to a forcing-off flange, then
- connecting the forcing-off flange to the fixing flange, then
- by forcing the forcing-off flange from the fixing flange the channel-fastening device is sealed within the fixing flange.

2. Method according to Claim 1, **characterized in that** the neutron flux measurement channels are turned into a position required for a remote connection of connectors to them.

3. Neutron flux measurement channels installation device for carrying out the method of sealing the set of neutron flux measurement channels according to Claim 1 or 2, the neutron flux measurement channels being arranged in one nozzle on the nuclear reactor head, **characterized in that** it includes:-
- channel-fastening device (1) with a cylindrical body for attaching a set of neutron flux measurement channels, the channel-fastening device is provided in its upper part (I) with channel bearings for inserting the individual neutron flux measurement channels of the mentioned set, each channel bearing is provided with an inner thread for a connection with the neutron flux measurement channel (13), wherein in its lower part (II) the channel-fastening device is designed for an insertion into the nozzle (4) of the reactor head;
- a fixing flange (3) having an internal through hole allowing to put the fixing flange on the channel-fastening device (1), the fixing flange (3) is provided with a step mounting (3a) for a sealed connection with the cylindrical body of the channel-fastening device (1), said cylindrical body is provided with an appropriately machined step for placing a sealing ring (5), wherein the fixing flange (3) is further provided with at least two sealing surfaces for a sealed connection with the nozzle and at least three holes for fasteners to connect with the nozzle, said at least three holes distributed around the circumference; and
- a forcing-off flange (2), wherein a locking mechanism is arranged in the forcing-off flange (2) for a connection with the channel-fastening device (1); the channel-fastening device (1) is provided with a complementary locking element co-operating with said locking mechanism; the fixing flange (3) is further provided with at least three holes (8a) for the flange fasteners distributed around the circumference, wherein the forcing-off flange (2) is provided with at least three corresponding through holes for said flange fasteners, the forcing-off flange (2) is further provided with at least three forcing-off elements for sealing the connection of the channel-fastening device (1) with the fixing flange (3) by means of the above-mentioned step mounting (3a).

4. Neutron flux measurement channels installation device according to Claim 3, **characterized in that** the fixing flange (3) is provided with six holes (8a) for the flange fasteners around the circumference, the flange fasteners being bolts (8), wherein the holes (8a) are plain to allow the passing of bolts (8) to be threaded into the nozzle, wherein the fixing flange (3) is further provided with three threaded holes (10a) around the circumference with step mountings for forcing-off screws (10).

5. Neutron flux measurement channels installation device according to Claim 4, **characterized in that** the bolts (8) are bolts with rods allowing to measure bolt elongation.

6. Neutron flux measurement channels installation device according to Claim 4, **characterized in that** the forcing-off screws (10) are provided with collars (10b) to facilitate a dismantling of the forcing-off flange (2).

7. Neutron flux measurement channel for the neutron flux measurement channels installation device according to Claim 3, the neutron flux measurement channel having an upper part (II) terminated with a connector (15) and a lower part (I) with sensors, **characterized in that** the upper part (II) is provided with a cylindrical section (19) terminated with a collar (21) to which a cylindrical sealing part (22) is connected from the opposite side in order to form a sealing assembly together with the collar (21) to seal the neutron flux measurement channel (13) in the device for installation of neutron flux measurement channels; the collar (21) and the cylindrical sealing part (22) forming a sealing rings space; wherein a socket screw (16) having an outer thread for a connection with the inner thread in channel-fastening device (1) is arranged in a sliding manner on the cylindrical section (19), wherein a fixing device (20) is provided on the opposite end of the cylindrical section (19) to prevent the neutron flux measurement channel from turning.

8. Neutron flux measurement channel according to Claim 7, **characterized in that** the cylindrical sealing part (22) is arranged for three sealing rings provided on each other.
